(19) Europäisches Patentamt
European Patent Office
Office européen des brevets

(11) Publication number: **0 572 077 A1**

# (12) EUROPEAN PATENT APPLICATION

(21) Application number: **93201457.4**

(22) Date of filing: **21.05.93**

(51) Int. Cl.5: **G02B 1/04**, C08F 283/00, C08F 299/00

(30) Priority: **26.05.92 IT MI921276**

(43) Date of publication of application: **01.12.93 Bulletin 93/48**

(84) Designated Contracting States: **AT BE CH DE DK ES FR GB GR IE IT LI LU MC NL PT SE**

(71) Applicant: **ENICHEM SYNTHESIS S.p.A.**
**Via Ruggero Settimo 55**
**I-90139 Palermo(IT)**

(72) Inventor: **Greco, Alberto**
**Via dei Mughetti 2**
**I-20070 Dresano, Milan(IT)**
Inventor: **Girelli, Daniele**
**Via d'Ovidio Francesco 3**
**I-20131 Milan(IT)**
Inventor: **Gagliardi, Claudio**
**Via R. Morandi 11/E**
**I-20097 San Donato Milanese, Milan(IT)**

(74) Representative: **Roggero, Sergio**
**Ing. Barzanò & Zanardo Milano S.p.A.**
**Via Borgonuovo 10**
**I-20121 Milano (IT)**

## (54) Organic glass with a high refractive index.

(57) Organic glass with a high refractive index is obtained by the cross-linking of liquid compositions containing a urethane resin, represented by the formula having the structure (I),

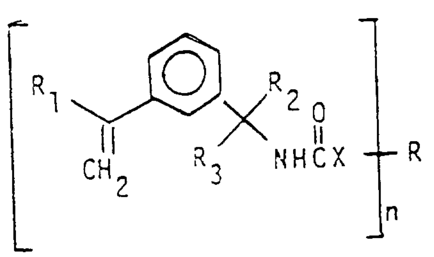

(I)

wherein R, $R_1$, $R_2$, $R_3$, X and n have the meaning defined in the text; this resin is diluted with one or more reactive compounds of the acrylate and/or methacrylate and/or styrene type.
The organic glass obtained by the thermal cross-linking of these compositions is characterized by a good transparency, hardness and processability as well as a refractive index $n_D$, measured at 20 °C, which is between 1.54 and 1.60.

EP 0 572 077 A1

The present invention relates to liquid compositions composed of a urethane resin, diluted in one or more reactive compounds of the acrylate and/or methacrylate and/or styrene type, and which can be cross-linked into organic glass with a high refractive index.

Organic glass obtained by the cross-linking of organic compositions based on acrylic, polystyrene resins or based on polycarbonates or their mixtures is already known in the art; this glass is mainly used in the production of optical items and is an alternative to inorganic glass in that it can be obtained more easily, it has a varied group of properties suitable for different uses, owing to the wide range of polymeric compositions available and to the low specific weight.

Among the characteristics of organic glass, the most important are shock-resistance, lack of fragility and the processability of the resins from which it derives.

Technology in this field is developing in that it is obtaining and at the same time requiring materials which are more and more sophisticated and without defects.

For example organic glass is known in the art, composed of products of the radicalic polymerization of poly(allyl carbonates) of polyols and used in the production of optical items (It 21327 A/90); however the refractive index of these materials is rather low and is not very suitable for the production of lenses with high diopters or for other products wherein this characteristic is fundamental and indispensable.

Other properties which, together with the high refractive index, are generally required for organic glass, are transparency, hardness and processability. The production of optical glass with this set of properties is one of the objectives in the art which has not yet been satisfactorily resolved.

Various polymeric compositions suitable for the production of organic glass with a high refractive index $n_D^{20}$ and higher than the minimum value of 1.50, have been proposed in the last ten years; among these numerous compositions are based on urethane resins containing unsaturations suitable for being cross-linked to optical glass.

(Meth)acrylate urethane resins, diluted in styrene compounds, are claimed for example in Patent JP 6011513 (CA 103 23288, 85); these have the structure:

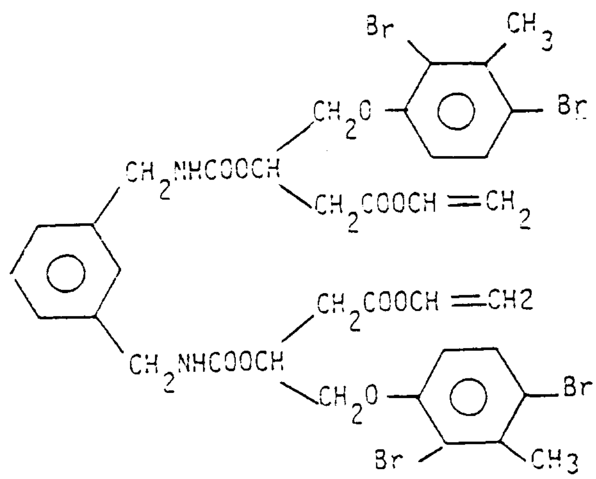

These resins have a refractive index, measured at 20 °C, higher than 1.55 ($n_D^{20}$>1.55), but are difficult to synthesize with suitable characteristics of optical purity as they are difficult to purify, owing to their complexity; for the same reason these resins are not perfectly colourless as is required for their intended uses.

Acrylate urethane resins, diluted in styrenes, are claimed in Patent JP 60249101 (CA 104 187790, 86): they correspond to the structures:

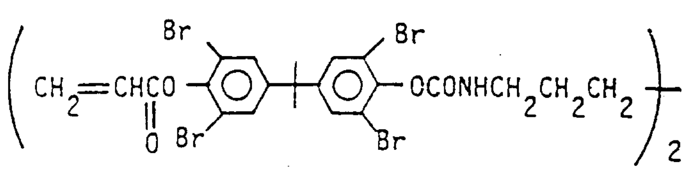

Also these resins, however, although having a high refractive index, have the disadvantage of being obtained by the reaction, in a reactive diluent, of hexamethylendiisocyanate with bisphenol-A monoacrylate, in a bicomponent system generally not accepted by the lenses producers.

An acrylate urethane resin is described in Patent EP 441383 (CA 46351,92), with the following structure:

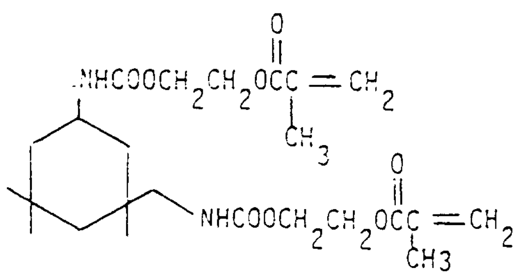

This resin, mixed with dimethacrylates and diluted to 40% by weight in methacrylates produces, after cross-linking, organic glass with a refractive index $n_D^{20}$ of about 1.54; the processability of these resins is good but, as shown above, the refractive index is unsatisfactory.

The present invention therefore relates to new liquid compositions capable of supplying organic glass for cross-linking, which overcome the disadvantages of the known art described above.

It has in fact been surprisingly found that liquid compositions, basically composed of a urethane resin containing unsaturations of the styrene type, diluted with one or more reactive compounds of the acrylate and/or methacrylate and/or styrene type capable of cross-linking via free radicals with the resin itself, produce, after thermal cross-linking or promoted with radicalic initiators, organic glass with a high refractive index and at the same time characterized by a high transparency and hardness; the above formulations are also characterized by an excellent processability and a low viscosity.

In accordance with this a first aspect of the present invention relates to liquid compositions, which can be polymerized via radicals, basically composed of a urethane resin either vitreous or in the form of a viscous liquid, diluted in one or more reactive compounds of the acrylate and/or methacrylate and/or styrene type and corresponding to the formula having the structure (I),

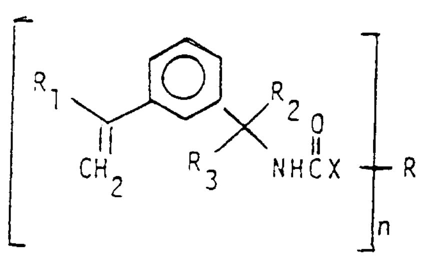

(I)

wherein,

R is an alkyl, alkylenic, cyclo-alkyl, cyclo-alkylenic, arylalkyl, aryloxyalkyl residue of a glycol, polyol, dimercaptan, polythiol, containing 2 to 30 carbon atoms, and/or 1 to 3 sulphur atoms, and/or 1 to 6 oxygen atoms, and/or 1 to 4 halogen atoms such as, for example, chlorine or bromine; preferably 2 to 19 carbon atoms and 1 or 2 sulphur or oxygen atoms;

$R_1$, $R_2$ and $R_3$, the same or different, are H or $CH_3$,

X is an oxygen or sulphur atom,

whereas n is an integer which is 2 or 3.

The present invention also relates to organic glass obtained by the radicalic cross-linking of the above compositions.

In the preferred embodiment, n is an integer equal to 2, X represents the oxygen atom, R represents a bivalent radical having the following structures:

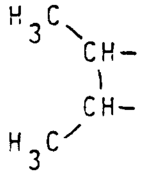 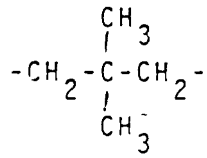 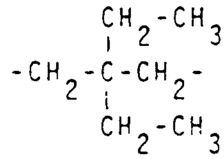 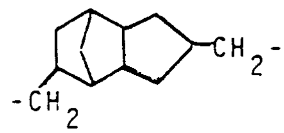 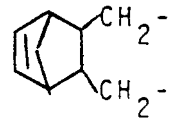

$-CH_2-CH_2-O-CH_2-CH_2-$ $-CH_2CH_2-S-CH_2-CH_2-$

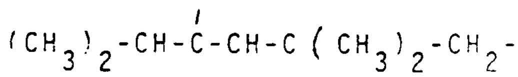

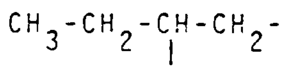 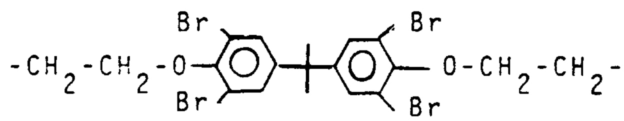

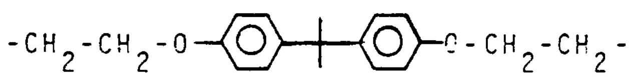

$-CH_2-CH=CH-CH_2-$

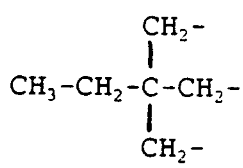

whereas $R_1$, $R_2$ and $R_3$ are the same and represent a methyl group.

The reactive compounds of the acrylate and/or methacrylate and/or styrene type, with which the resin (I) is diluted, can be mono- or bi- or poly-functional in that they contain 1 or 2 or more unsaturations; they are selected from those having a high refractive index, low viscosity and good optical properties, in the groups of acrylic, methacrylic and styrene compounds. The following products are non-limiting examples for the purposes of the present invention of reactive compounds of the acrylate and/or methacrylate type: Benzyl-(Meth)acrylate, phenyl-(Meth)acrylate, phenoxyethyl-(Meth)acrylate, cyclohexyl-(Meth)acrylate; and also,

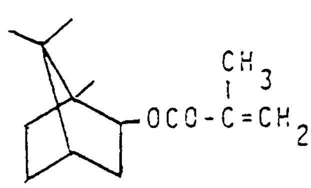

(isobornyl-(Meth)acrylate),

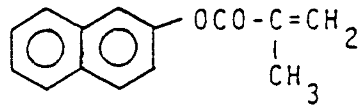

(2-Naphtyl-(Meth)acrylate)

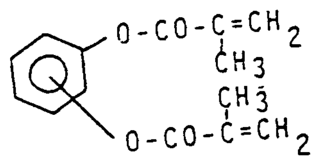

(o,m,p)phenylene-di(Meth)acrylate),

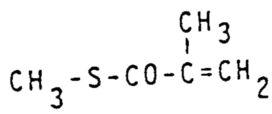

(methylthio-(Meth)acrylate),

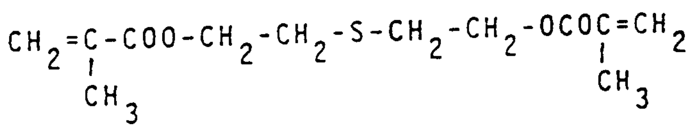

(thiodiethylen-di(Meth)acrylate),

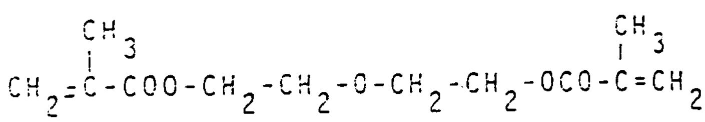

(diethylenglycol-di(Meth)acrylate),

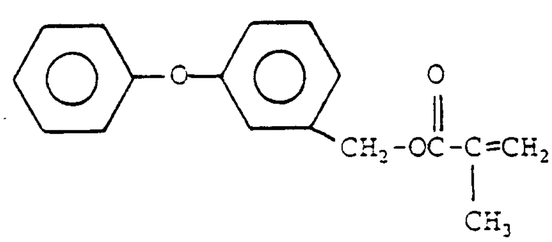

(phenoxybenzyl(Meth)acrylate),

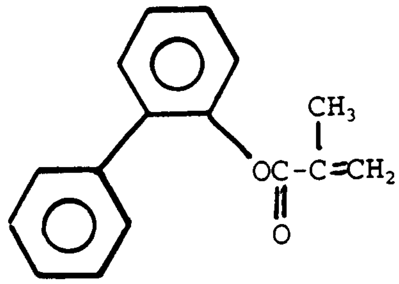

(2-phenylphenyl(Meth)acrylate),

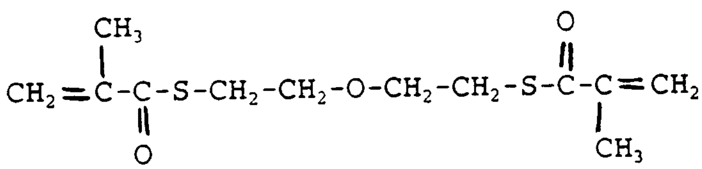

(2,2' -oxydiethanthyol-di(Meth)acrylate).

As examples of reactive compounds of the styrene type, the following products can be mentioned: m-divinylbenzene, m-ethylvinylbenzene, styrene, α-methylstyrene, (o,m,p)-chlorostyrene, (o,m,p)-bromostyrene, 2-isopropenyl-naphthalene, vinyltoluene.

These reactive compounds are preferably added to the resin when its synthesis has terminated.

The quantity of reactive compounds of the acrylate and/or methacrylate and/or styrene type with which the resin (I) is diluted, is such that the weight ratio resin/reactive diluent is between the values of 45/55 and 90/10 and styrenic diluent, if present, does not represent more than 25%, preferably than 15%.

Radicalic polymerization initiators (peroxides or azocompounds) and optionally, other additives such as stabilizers, bleachers, dyes, detaching agents etc., are added to the liquid formulation thus obtained, and cooled to room temperature.

The radicalic polymerization initiators are composed of peroxides or peresters such as for example benzoylperoxide, t-butylperoctoate, dicyclohexylpercarbonate. These are added to the liquid formulation in the proportion of 0.01 - 5% by weight, and preferably between 0.1 and 2% by weight.

As an alternative to peroxides, diazoderivatives may be used such as azobisisobutyronitrile and Azobisisovaleronitrile etc. The percentage of azocompound, when used, varies from 0.001 to 0.5% by weight, preferably from 0.01 to 0.2% by weight.

As already mentioned, other additives such as dyes, UV absorbers etc. may also be added to the liquid compositions of the present invention. Their proportion is however relatively small and does not exceed 1% by weight of the formulation, which is consequently composed of the following main constituents: i) Resin (I), ii) reactive diluents, iii) polymerization initiators, iv) other optional components such as dyes and UV absorbers.

The basic resin of the compositions of the present invention, corresponding to the formula having structure (I), can be easily obtained by reacting two moles of an isocyanate having formula (II),

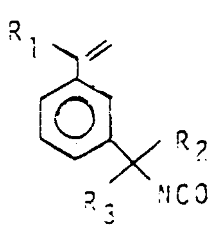

(II)

wherein $R_1$, $R_2$ and $R_3$ have the meaning defined above, with a glycol or dimercaptan corresponding to the formula having the structure (III):

HX-R-XH (III)

wherein X, as already specified, corresponds to a sulphur or oxygen atom and R has the meaning defined above.

This reaction is generally carried out over a period varying from 2 to 24 hours at a temperature of between 20 and 120 ° C, adding the glycol or thiol (III) to the isocyanate having formula (II) or viceversa. To accelerate the synthesis reaction of (I), the usual catalysts normally used in the synthesis of urethanes can be used (Saunders and Frisch; Polyurethanes Chemistry and Technology. Interscience, New York 1964), such as organometallic derivatives of tin, for example tin dibutyl-dilaurate, and tertiary amines or their combinations; the quantities of these catalysts generally vary from 0.01 to 1% by weight with respect to the total quantity of the two reagents (II) and (III). Radicalic polymerization inhibitors can be added to the reaction medium to avoid the polymerization of the styrene reactive compound, when used.

The quantity of the above additives possibly added to the compositions of the present invention is very small and is between 0.001 and 1% by weight.

The reaction for the formation of urethane is hexothermal and it is necessary to control the temperature during the addition of the glycol to the isocyanate or viceversa. The preferred temperature range is between 40 and 100 ° C.

The reaction can also be carried out in the presence of the reactive diluents or part of these even if, as already mentioned, the latter are preferably added to the resin when its synthesis has terminated.

Reactive compounds of the acrylate and/or methacrylate and/or styrene type, with which the resin (I) is diluted to produce the compositions of the present invention, are available on the market; the same applies to the radicalic initiators mentioned above.

The liquid compositions of the present invention thermally harden within 1-48 hours at a temperature of between 40 and 130 ° C.

However the cross-linking of the liquid compositions of the present invention to give organic glass generally takes place in two distinct steps: during the first step, the composition to be cross-linked is heated in the mould with the shape of the final product to a temperature which is several tens of degrees lower than that corresponding to a halving time of the radicalic initiator of 10 hours. The composition is generally kept at this temperature for a time ranging from 6 to 15 hours. During the second step, the composition is maintained at a temperature of 30-50 ° C higher than that of the first step, and for a time ranging from one to 6 hours.

The cross-linking of the compositions is delayed by the presence of oxygen and for the correct hardening of the formulations the absence of air is consequently required.

Unlike the previous art, in this patent, formulations are claimed which are capable of giving lenses with the following advantages:

a) Use of compositions containing a high proportion of aromatic nuclei, owing to the particular type of aromatic resin (I), which constitutes, of preference, the basic compound of the compositions,

b) all the components of the compositions are composed of well-defined structures without polymeric by-products, which are often found in the known art; this fact justifies the particularly low viscosity of the compositions even if they contain up to 80% of the basic resin (I) (see experimental part),

c) the compositions have a monocomponent system in that it is not necessary to add two different mixtures shortly before use as often happens with the compositions of the known art (JP 602449101; CA 104 187790, 86),

d) an isocyanate (II) characterized by a low level of toxicity, is used in the synthesis of resin (I); at the same time compounds are used which are low or moderatly priced and easily available on the market,

e) finally, by the cross-linking of the compositions of the present invention, lenses with good transparency, hardness and processability are obtained.

The following illustrative examples provide a better understanding of the present invention and enable its embodiment but do not limit it in any way.

## EXAMPLE 1

20.1 g (0.1 moles) of Dimethyl-m-Isopropenyl-Benzyl-Isocyanate (TMI) having the following structure formula:

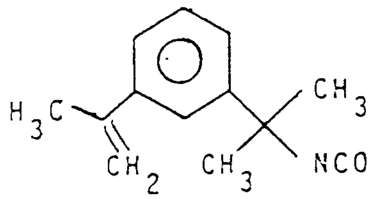

(IV)

5.2 g (0.05 moles of Neopentylglycol, 5 mg of hydroquinone monomethylether and 10 mg of tin dibutyldilaurate (SnDBL), are placed in a 150 ml three-necked flask equipped with a mechanical stirrer, thermometer and nitrogen valve. The suspension is stirred at a temperature not higher than 80 °C until the I.R. signal of the NCO group (band at 2260 cm 1) has disappeared, which occurs after about 2-3 hours.

The resin, obtained with practically quantitative yields, has structure (I) where: R corresponds to the group,

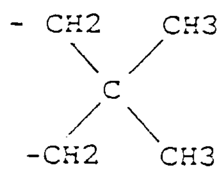

whereas R1, R2 and R3 are the same and correspond to the group -CH3.

The resin obtained is cooled to 65 °C and diluted at this temperature with phenoxyethylacrylate (6 g) and Divinylbenzene (5.1 g). The temperature of the solution of the resin in the diluents is maintained at 45-50 °C, the detaching wax and initiator tButylperoctoate 0.36 g (1% by weight) are added; the liquid composition thus obtained has an amount of resin (I) of about 70% by weight. After degassing to an average value of vacuum (30-50 mmHg), the solution is limpid and colourless; it is then placed between two glass sheets with a thickness of 2 mm and cross-linked between Viton seals at 67 °C for 16 hours and then at 100 °C for 24 hours.

The lens is perfectly detachable from the glass, is colourless and transparent with the following characteristics:

| | |
|---|---|
| Refractive index | = 1.5661 |
| Light transmission | = 91 % |
| Abbe number | = 36.1 |
| Rockwell hardness | = 98.5 |
| tg | = 70 °C |
| Density | = 1.1336 |

EXAMPLE 2

Using the same procedure as example 1 and reacting TMI (40.2 g; 0.2 moles) with 4.8-bis-(hydroxymethyl)-tricyclo(5.2.1.$0^{2,6}$)-decane (19.6 g, 0.1 moles), a resin having the formula with structure (I) is prepared wherein: R corresponds to the group,

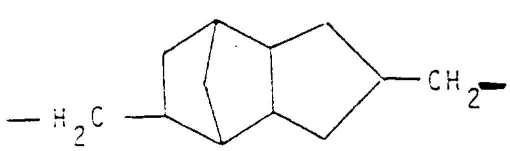

whereas R1, R2 and R3, the same, correspond to the group -CH3.

The resin is diluted at 67% in solids with phenoxyethylacrylate (10 g) and Divinylbenzene (18.4 g).

The solution is divided into four quantities of 20 g each, to which the catalyst tButylperoctoate is then added in varying quantities; the solutions are crosslinked according to the heating cycle: from 50 to 70 °C in 5 hours, at 70 °C for 16 hours, from 70 to 100 °C in 2 hours, at 100 °C for 1 hour. The glass obtained has the characteristics shown in the following Table:

TABLE 1

| Formulation number | Peroxide (% w/w) | (%) Light transmiss. | Rockwell Hardness | Refractive Index |
|---|---|---|---|---|
| 2.1 | 0.4 | 90.6 | 112 | 1.57770 |
| 2.2 | 1.0 | 90.7 | 111 | 1.5757 |
| 2.3 | 2.0 | 90.6 | 107 | 1.5745 |
| 2.4 | 4.0 | 90.5 | 100 | n.d. |

EXAMPLE 3

60 g of a resin having the formula with the structure which is identical to that specified in example 2, is diluted at 65% in solids with Divinylbenzene (18.5 g), Benzylmethacrylate (4 g) and phenoxyethylacrylate (10 g). Azobisisobutyronitrile (65 mg) is added to the liquid formulation which is cross-linked in a mould similar to that used in example 1 and according to the heating cycle: from 50 to 65 °C in 2 hours, at 65 °C for 16 hours, from 65 to 110 °C in 5 hours, at 110 °C for 1 hour.

The lens obtained has the following characteristics:

| | |
|---|---|
| Refractive Index | = 1.5765 |
| Light transmission | = 91 % |
| Abbe number | = 34.98 |

EXAMPLES 4-15

Using the same procedure as example 1, various resins as shown in Table 2, are prepared starting from TMI (Dimethyl-m-isopropenyl-benzylisocyanate) and different glycols or dimercaptans. These are then diluted with various diluents (see Table 3) and, after adding the catalyst (see Table 3), are cross-linked to organic glass whose characteristics are indicated in Table 4.

TABLE 2

| Example number | TMI (g) | Component with formula (III) Type | (g) |
|---|---|---|---|
| 4 | 20.1 | $(HOCH2CH2)_2S$ | 6.1 |
| 5 | 8.3 | 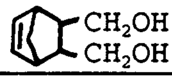 | 3.18 |
| 6 | 13.58 | $CH3CH2C(CH2OH)_3$ | 3.02 |
| 7 | 8.26 | $(CH3)_2CHCH(OH)C(CH3)_2CH2OH$ | 3.00 |
| 8 | 22.4 | HOCH2CH=CHCH2OH | 5.00 |
| 9 | 16.6 | 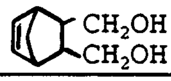 | 6.4 |
| 10 | 22.4 | HOCH2CH=CHCH2OH | 5.00 |
| 11 | 16.6 | 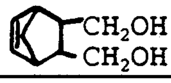 | 6.4 |
| 12 | 20.1 | $HOCH2C(CH3)_2CH2OH$ | 5.2 |
| 13 | 20.1 | $HOCH2C(CH3)_2CH2OH$ | 5.2 |
| 14 | 10.04 | 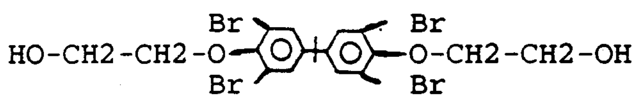 | 15.81 |
| 15 | 10.04 | 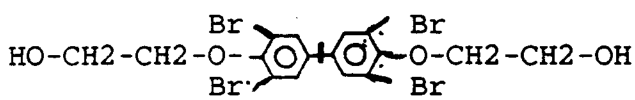 | 15.81 |
| 16 | 40.4 | HOCH2CH2SCH2CH2OH | 12.2 |
| 17 | 40.4 | HOCH2CH2SCH2CH2OH | 12.2 |
| 18 | 40.4 | HOCH2CH2SCH2CH2OH | 12.2 |
| 19 | 40.4 | HOCH2CH2SCH2CH2OH | 12.2 |
| 20 | 20.1 | 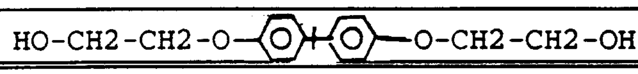 | 15.8 |

TMI : Dimethyl-m-isopropenyl-benzyl-isocyanate

TABLE 3

| Example number | Resin weght % | Reactive components (weight %) | | tBPO (weight %) |
|---|---|---|---|---|
| 4 | 70 | DVB 16 | PEA 14 | 1 |
| 5 | 67 | DVB 16 | PEA 17 | 1.5 |
| 6 | 75 | DVB 12 | PEA 13 | 1.4 |
| 7 | 67 | DVB 16 | PEA 17 | 1.5 |
| 8 | 63 | DVB 11 | PEA 26 | 1 |
| 9 | 66 | DVB 18 | BzMA 16 | 1.5 |
| 10 | 71 | DVB 12 | BzMA 17 | 1 |
| 11 | 67 | DVB 16 | CHMA 17 | 1.5 |
| 12 | 65 | DVB 14 | BzMA 21 | 1.2 |
| 13 | 66 | DVB 14 | CHMA 20 | 1.3 |
| 14 | 65.5 | DVB 18.5 | BzMA 16 | 1.3 |
| 15 | 60 | DVB 15 | PEA 25 | 1.5 |
| 16 | 62 | DVB 26 | BzMA 12 | 1.2 |
| 17 | 60 | EGDH 14.5 | BzMA 14.5 | 1.1 |
| 18 | 61 | DVB 13 | BzMA 26 | 1.1 |
| 19 | 69 | NPGDA 18 | BzMA 13 | 1.5 |
| 20 | 61 | DVB 16 | BzMA 23 | 1 |
| DVB Divinyl benzene; PEA Phenoxyethyl acrylate; BzMA Benzyl methacrylate; CHMA cyclohexyl methacrylate; tBPO terButyl peroctoate; EGDH Ethylenglycol-dimethacrylate; NPGDA Neopentyl-glycoldiacrylate. | | | | |

TABLE 4

| Example number | Refractive index | Abbe number | Rockwell hardness | (%) light transmission |
|---|---|---|---|---|
| 4 | 1.5818 | 33.9 | 94 | 89.6 |
| 5 | 1.5705 | 33.75 | 109 | 87.8 |
| 6 | 1.5705 | 33.75 | 110 | 87 |
| 7 | 1.5504 | 34.54 | 93 | 90 |
| 8 | 1.5783 | 33.88 | 103 | = |
| 9 | 1.5755 | 33.84 | 116 | 90 |
| 10 | 1.5750 | 34.94 | 109 | 89.8 |
| 11 | 1.5665 | 34 | 117 | 89.4 |
| 12 | 1.5667 | 33.68 | 106 | 91.2 |
| 13 | 1.5560 | 37.34 | = | 91.3 |
| 14 | 1.5985 | 31.35 | 117 | 89.3 |
| 15 | 1.5970 | 32.21 | 110 | 88.9 |
| 16 | 1.5866 | 32.01 | 107 | 91.1 |
| 17 | 1.5668 | 37.5 | 104 | 89.0 |
| 18 | 1.5807 | 35.05 | 102 | 88.0 |
| 19 | 1.5610 | 37.39 | 100 | 88.3 |
| 20 | 1.5854 | 32.95 | 115 | 90.2 |

**Claims**

**1.** Liquid compositions, which can be polymerized via radicals, basically composed of a urethane resin, diluted in one or more reactive compounds of the acrylate and/or methacrylate and/or styrene type and corresponding to the formula having the structure (I),

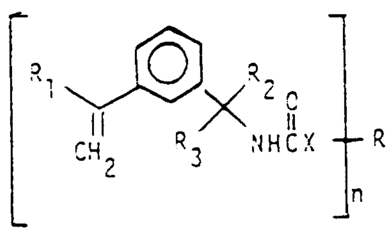

(I)

wherein
R is an alkyl or cyclo-alkyl residue of a glycol, polyol, polythiol, dimercaptan, containing from 2 to 19 carbon atoms and 1 or 2 sulphur or oxygen atoms,
$R_1$, $R_2$ and $R_3$, the same or different, are H or $CH_3$, X is an oxygen or sulphur atom,
whereas n is an integer which is 2 or 3.

**2.** Liquid compositions according to claim 1, characterized in that, n is an integer equal to 2, X represents an oxygen atom, R represents a bivalent radical having one of the following structures:

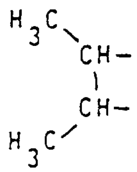
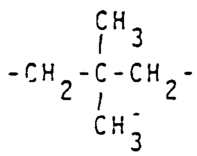
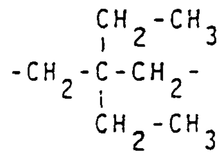
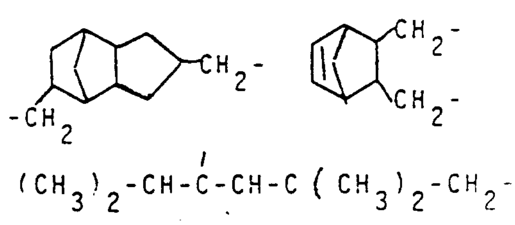

$-CH_2-CH_2-O-CH_2-CH_2-$ $-CH_2CH_2-S-CH_2-CH_2-$

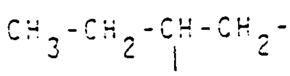
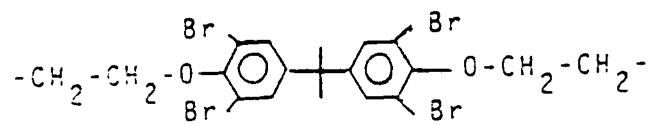

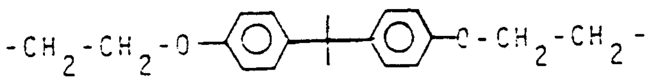

$-CH_2-CH=CH-CH_2-$

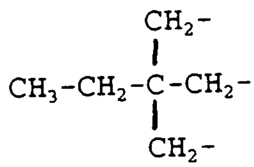

whereas $R_1$, $R_2$ and $R_3$ are the same and represent a methyl group.

**3.** Liquid compositions according to claim 1, characterized in that, the reactive compounds of the acrylate and/or methacrylate type, with which resin (I) is diluted, can be either mono- or bi- or poly-functional in that they contain 1 or 2 or more unsaturations and are selected from those belonging to the groups of acrylic and/or methacrylic compounds.

**4.** Liquid compositions according to claim 3, characterized in that, the acrylic and/or methacrylic compounds are preferably selected from those belonging to the following group: benzyl-(Meth)acrylate, phenyl-(Meth)acrylate, phenoxyethyl-(Meth)acrylate, cyclohexyl-(Meth)acrylate, (isobornyl-(Meth)-acrylate), 2-Naphtyl-(Meth)acrylate), (o,m,p)phenylene-di(Meth)acrylate), methylthio-(Meth)acrylate, thiodiethylen-di(Meth)acrylate, diethylenglycol-di(Meth)acrylate.

**5.** Liquid compositions according to claim 1, characterized in that, the reactive compounds of the styrene type are preferably selected from those belonging to the following group: m-divinylbenzene, m-ethylvinylbenzene, styrene, α-methylstyrene, (o,m,p)-chlorostyrene, (o,m,p)-bromostyrene, 2-isopropenyl-naphthalene.

**6.** Liquid compositions according to claim 1, characterized in that, the quantity of reactive compounds of the acrylate and/or methacrylate and/or styrene type with which resin (I) is diluted, is such that the weight ratio resin/reactive diluent is between the values of 45/55 and 90/10.

**7.** Liquid compositions according to claim 6, characterized in that, the quantity of reactive compounds of the acrylate and/or methacrylate and/or styrene type with which resin (I) is diluted, is such that the stirenic diluent does not exceed 25%.

**8.** Liquid compositions according to claim 1, characterized in that, they contain from 0.01 to 5% by weight of a radicalic polymerization initiator.

**9.** Liquid compositions according to claim 1, characterized in that, they may optionally contain up to 1% by weight of other additives such as dyes and/or UV absorbers.

**10.** Preparation of the resin represented by the structure formula (I) of claim 1, by reacting two moles of an isocyanate, having the structure formula:

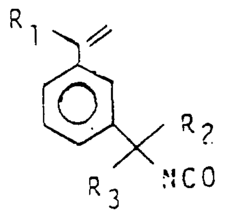

(II)

wherein $R_1$, $R_2$ and $R_3$ have the meaning defined above, with a glycol or dimercaptan corresponding to the structure formula HX-R-XH (III), where X corresponds to a sulphur or oxygen atom and R has the meaning defined above.

**11.** Preparation according to claim 10 of the resin represented by the structure formula (I), wherein the reaction of diisocyanate (II) with the glycol or dimercaptan (III), is carried out by adding the glycol or thio (III) to the isocyanate (II) or viceversa.

**12.** Preparation according to claim 10 of the resin represented by the structure formula (I), wherein the reaction of diisocyanate (II) with the glycol or dimercaptan (III) is carried out in a period ranging from 2 to 24 hours at a temperature of between 20 and 120 °C.

**13.** Preparation according to claim 10 of the resin represented by the structure formula (I), wherein the reaction of diisocyanate (II) with the glycol or dimercaptan (III) is carried out in the presence of small quantities of tin-dibutyl-dilaurate which are between 0.01 and 1% by weight with respect to the total quantity of the two reagents.

**14.** Optical glass obtained by the cross-linking in a mould of the compositions according to claims 1 to 9.

**15.** Optical lenses obtained by the cross-linking in a mould of the compositions according to claims 1 to 9.

European Patent Office

# EUROPEAN SEARCH REPORT

Application Number

EP 93 20 1457

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 385 456 (MITSUI TOATSU CHEMICALS INC.)<br>* claims *<br>--- | 1-15 | G02B1/04<br>C08F283/00<br>C08F299/00 |
| A | EP-A-0 331 217 (AKZO N.V.)<br>* claims *<br>--- | 1,2 | |
| A | POLYMER BULLETIN<br>vol. 27, no. 2, November 1991, BERLIN<br>pages 213 - 220 , XP259937<br>KOHICHIRO KAWATE, TAKASHI SASAKI 'Effect of monofunctional diluents on the mechanical properties of electron beam cured films obtained from urethane prepolymers'<br>----- | | |
| | | | TECHNICAL FIELDS SEARCHED (Int. Cl.5) |
| | | | G02B<br>C08F |

The present search report has been drawn up for all claims

| Place of search | Date of completion of the search | Examiner |
|---|---|---|
| THE HAGUE | 07 SEPTEMBER 1993 | KAUMANN E.K-H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)